(19) Europäisches Patentamt
European Patent Office
Office européen des brevets

(11) **EP 3 958 024 A1**

(12) **EUROPÄISCHE PATENTANMELDUNG**

(43) Veröffentlichungstag:
**23.02.2022   Patentblatt 2022/08**

(21) Anmeldenummer: **20192230.9**

(22) Anmeldetag: **21.08.2020**

(51) Internationale Patentklassifikation (IPC):
**G02B 3/14** *(2006.01)*    **G02B 21/02** *(2006.01)*

(52) Gemeinsame Patentklassifikation (CPC):
**G02B 21/02; G02B 3/14**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Qioptiq Photonics GmbH & Co. KG
37081 Göttingen (DE)**

(72) Erfinder: **Hackemer, Witold
37434 Gieboldehausen (DE)**

(74) Vertreter: **Bosch Jehle Patentanwaltsgesellschaft mbH
Flüggenstraße 13
80639 München (DE)**

Bemerkungen:
Geänderte Patentansprüche gemäss Regel 137(2) EPÜ.

(54) **AUTOFOKUSSIERBARES MIKROSKOPOBJEKTIV MIT FLÜSSIGLINSE**

(57)    Die Erfindung betrifft ein autofokussierbares Mikroskopobjektiv (2), das ein optisches System (4) aus mehreren optischen Komponenten umfasst, die jeweils durch eine Linse oder Linsengruppe gebildet sind. Dabei ist eine der mehreren optischen Komponenten eine Flüssiglinse, um die Autofokussierung des Mikroskopobjektivs (2) zu bewirken, und das optische System (4) ist als stationäres System ausgebildet. Ein weiterer Aspekt der Erfindung betrifft ein Mikroskop, das das vorstehend beschriebene Mikroskopobjektiv umfasst.

Fig.1

**EP 3 958 024 A1**

**Beschreibung**

Die Erfindung betrifft ein autofokussierbares Mikroskopobjektiv.

Bei Mikroskopobjektiven wird zwischen Objektiven mit endlicher Tubuslänge (Endlich-Optik) und Objektiven mit "unendlicher" Tubuslänge (Unendlich-Optik) unterschieden.

Falls bei der Untersuchung von Präparaten planoptische Komponenten, wie z.B. Filterscheiben, Prismen, Planglasilluminatoren, polarisationsoptische Elemente, in den bildseitigen Strahlengang des Objektivs eingebracht werden sollen, bedingen sie eine der Glasweglänge der eingebrachten Komponente proportionale Verschiebung der Zwischenbildebene, kurz ZBE, im Mikroskop. In vielen Fällen führt ihr Einsatz im konvergenten Strahlengang zum Anstieg der Aberrationen, was auch zum Verlust der Funktion des Mikroskops führen kann. Dieser Umstand erfordert konstruktive Maßnahmen im Mikroskop, um den ZBE-Ort in seiner Position wieder zu rektifizieren. So ist es möglich, Anpassungen der Tubuslänge vorzunehmen bzw. mittels dioptrischer Spezialmodule einen Abschnitt kollimierten Lichtes im entsprechenden Tubusabschnitt zu erzeugen (sog. Telan Systeme).

Ein Mikroskopobjektiv mit einer Endlich-Optik erzeugt ein reelles Zwischenbild. Falls bei der Untersuchung von Präparaten Filter oder andere Elemente in den Strahlengang zwischen Objektiv und Zwischenbild eingebracht werden sollen, ist es erforderlich, Zwischentuben zu verwenden. Dies erfordert einen erheblichen Aufwand.

Demgegenüber ist der Strahlengang bei einem Mikroskop mit Unendlich-Optik so gestaltet, dass die zu einem Objektpunkt gehörenden Lichtstrahlen nach dem Verlassen des Objektivs zueinander parallel verlaufen. Im Raum kollimierter Aperturstrahlen bedingt die Einführung planoptischer Komponenten keine Verlagerung der Zwischenbildebene. Ihr Einfluss auf den in diesem Raum meist verengten Verlauf der Hauptstrahlen und somit auf die Pupillenabbildung kann u.a. durch die Definition und Einhaltung der Länge des Kollimationsraumes im Rahmen gehalten werden. In den Strahlengang parallel verlaufender Strahlen können dann Filter oder andere Elemente eingebracht werden, ohne dass Zwischentuben erforderlich sind. Der Unendlich-Raum endet an einem im Mikroskoptubus integrierten Tubuslinsensystem, dessen Aufgabe in der Erzeugung eines reellen Zwischenbildes mit zusätzlicher chromatischer, astigmatischer und auch sphärochromatischer Kompensation bestehen kann.

Um entlang der z-Achse, die der optischen Achse des Mikroskops entspricht, eine Abtastung unterschiedlich tief im Objektraum liegender Objektebenen zu verwirklichen, ist eine Umfokussierung des Mikroskopobjektivs erforderlich. Es ist bekannt, eine entsprechende Umfokussierung automatisch vorzunehmen, das Mikroskopobjektiv also autofokussierbar auszugestalten. In bekannten Mikroskopen erfolgt die Fokussierung unter Verwendung einer Verstellmechanik, mit deren Hilfe optische Komponenten eines Mikroskops entlang der optischen Achse (re-)positioniert werden, um das Objektiv auf eine bestimmte Schärfeebene einzustellen. In bekannten automatisierten Bildanalyseverfahren zeigt sich jedoch schnell, dass der "klassische" Umfokussierungsvorgang, beispielsweise mit Piezoelementen als Aktuatoren, nur sehr langsam abläuft und so für Anwendungen, die eine schnelle Fokussierung erfordern, ungeeignet ist.

Der Erfindung liegt daher die Aufgabe zugrunde, ein autofokussierbares Mikroskopobjektiv mit einem als Endlich- oder Unendlich-Optik ausgebildeten optischen System und einer kompakten Bauweise zur Verfügung zu stellen, bei dem die Autofokussierung auf präzise, abbildungstreue und schnelle Weise ermöglicht wird.

Diese Aufgabe wird durch das erfindungsgemäße Mikroskopobjektiv gemäß Anspruch 1 und das Mikroskop gemäß Anspruch 15 gelöst. Vorteilhafte Ausgestaltungen der vorliegenden Erfindung sind in den Unteransprüchen 2 bis 14 angegeben.

Die Erfindung betrifft ein autofokussierbares Mikroskopobjektiv, das ein optisches System aus mehreren optischen Komponenten umfasst, die jeweils durch eine Linse oder Linsengruppe gebildet sind. Dabei ist eine der mehreren optischen Komponenten eine Flüssiglinse, um die Autofokussierung des Mikroskopobjektivs zu bewirken, und das optische System ist als stationäres System ausgebildet.

Erfindungsgemäß kann das autofokussierbare Mikroskopobjektiv eine Endlich- oder eine Unendlich-Optik aufweisen. Im ersteren Fall führen in das Mikroskopobjektiv gekoppelte Lichtstrahlen zu einem reellen Zwischenbild, wohingegen im letzteren Fall eingekoppelte Lichtstrahlen das optische System mit paralleler Ausrichtung verlassen.

Eine Flüssiglinse, auch bekannt als Flüssigkeitslinse oder im Englischen (variable) fluid lens, VFL, weist beispielsweise eine aus zwei Glasplatten gebildete Kammer auf, die mit zwei sich nicht mischenden transparenten Flüssigkeiten/flüssigen Medien gefüllt ist. Die genannten Glasplatten können als Eintritts- und Austrittsfenster zum Ein- und Auskoppeln eines Lichtbündels in die Flüssiglinse ausgebildet sein. In Erstreckungsrichtung der optischen Achse der Flüssiglinse sind beide Flüssigkeiten bzw. flüssigen Medien z.B. benachbart angeordnet. Ferner weisen die sich nicht mischenden transparenten Flüssigkeiten unterschiedliche Brechungsindizes (auch "Brechzahlen" genannt) und elektrische Eigenschaften auf, z.B. unterschiedliche Öle oder Öl und Wasser. Für ähnliche, insbesondere identische Dichten der Flüssigkeiten ist die Flüssiglinse besonders robust gegenüber mechanischen Stößen. Durch das Anlegen eines elektrischen Feldes, das von den Flüssigkeiten benachbarten Elektroden ausgeht und das besagte Flüssigkeiten durchsetzt, verändert die Flüssiglinse ihre Form (sog. Elektrobenetzung; engl.: electrowetting), insbesondere den Krümmungsradius der Flüssigkeiten, welcher sich aus ihrem gemeinsamen Kontakt- bzw. Grenzflächen bildet, und somit auch ihre Brechkraft bzw. ihre Brennweite. Hierfür sind die gewählten Flüssigkeiten aus einem polarisierbaren Material. Diese richten sich parallel zur Richtung des elektrischen Feldes hin aus. Auf diese Weise lässt sich der besagte Krümmungsradius frei wählen und dadurch optische Funktionen wie eine Fokussierung oder eine Brennweitenvariation schnell und ohne mechanische Bewegung der Flüssiglinse umsetzen. Das Anlegen eines bestimmten elektrischen Feldes erfolgt mit Hilfe eines Controllers/Drivers, mit dem sich die angelegte Spannung an die Elektroden steuern lässt. Wenn bei einer spezifischen Spannung die gemeinsame Grenzfläche der Flüssigkeiten einen unendlichen Krümmungsradius hat, ist die Flüssiglinse brechkraftlos/in einem brechkraftlosen Zustand; sie bildet dabei nur ein System von vier planparallelen Schichten/Platten mit unterschiedlichen Brechungsindizes und mit Medien unterschiedlicher Dispersion. Für weitere unterschiedliche Spannungswerte hat die Grenzfläche der flüssigen Medien einen endlichen Radius, der konkav oder konvex sein kann. Je kleiner der Krümmungsradius ist, desto größer ist die positive oder negative Brechkraft der Flüssiglinse und vice versa. In den Fällen, in denen kein brechkraftloser Zustand vorliegt, befindet sich die Flüssiglinse in einem Brechungszustand.

Ein optisches System ist stationär ausgebildet, wenn für die Einstellung bestimmter Schärfeebenen eine Translation, speziell eine mechanische Bewegung, der optischen Komponenten nicht erforderlich ist. Mit Hilfe von Flüssiglinsen wird - wie vorstehend dargelegt - eine Umfokussierung durch Änderung der Linsenform erzielt; eine Verschiebung bzw. Translation der gesamten Flüssiglinse als optische Komponente ist daher nicht erforderlich. Im Gegensatz dazu müssen bekannte, starre Linsen innerhalb des optischen Systems für die Einstellung unterschiedlicher Schärfeebene vollständig verschoben werden, d.h. an diesen Linsen ist eine Translation auszuführen. Zudem ist die mechanische Umfokussierung nur durch eine Objektivverschiebung ausschließlich in Mikroskopsystemen unendlicher Tubuslänge zulässig. Systeme endlicher Tubuslänge müssen im Ganzen aufgrund von Umfokussierungsaberrationen der eingesetzten Objektive verstellt werden. In diesem Fall bringt das für eine endliche Tubuslänge ausgestaltete erfindungsgemäße Mikroskopobjektiv durch seine Stationärität besondere Vorteile.

Der Durchmesser von Flüssiglinsen kann z.B. 3.5 bis 4 mm, insbesondere zwischen 3.6 und 3.9 mm betragen. Größere Durchmesser über 4 mm sind ebenso möglich; sie können jedoch aufgrund von Störeffekten, wie z.B. eine erhöhte Wellenfrontdeformation oder eine geringere Stabilität in Bezug auf die variable Lage der Linse im Gravitationsfeld, zu einer reduzierten Abbildungsleistung im Vergleich zu Linsen geringeren Durchmessers führen. Die wellenoptische Schärfentiefe beschreibt den Defokussierungsweg für ein ideales optisches bzw. aberrationsfreies System, bei welchem die relative Punktbildintensität (Strehlsche Definitionshelligkeit, kurz DEH), auf 80% ihres Maximalwertes absinkt. Ihr Wert hängt von der Wellenlänge $\lambda$ und der (numerischen) Systemapertur $A = n \cdot \sin(u)$ ab, wobei n der Brechungsindex des optischen Mediums im Objektraum und $u$ der objektseitige Aperturstrahlwinkel mit der optischen Achse sind, und ist definiert durch:

$$b_{0.80} = \pm \frac{n\,\lambda}{2A^2}.$$

Für eine typische numerische Apertur von A = 0.50 im Wellenlängenspektrum des sichtbaren Lichts ($\lambda \approx 500$ nm) ergibt sich eine wellenoptische Schärfentiefe von ca. +/- 1 $\mu$m. Wie unten näher erläutert wird, ist eine weitere charakteristische Größe einer Flüssiglinse die äquivalente Abbe-Zahl $v_{äq}$. $v_{äq}$ ist eine dimensionslose Größe. Bevorzugt liegt die äquivalente Abbe-Zahl $v_{äq}$ der Flüssiglinse zwischen 14 und 25, besonders bevorzugt zwischen 14 und 20.

Während bekannte Objektive mit Verstellmechanik je nach Verfahrweg und technischer Umsetzung mehrere Sekunden benötigen und dabei eine Positionierungsgenauigkeit von 0.2 bis 2 $\mu$m erzielen, kann das erfindungsgemäße Mikroskopobjektiv nach nur wenigen Millisekunden die Schärfeebene und aufgrund fein abgestimmter Änderungen der Linsenform mit einem höheren Fokussierungsgrad als klassische Systeme wechseln. Weiterhin hat der Einsatz eines stationären Systems mit Flüssiglinse den Vorteil, dass das optische System eine kompaktere Bauweise ermöglicht als Systeme, die unterschiedliche Schärfeebenen durch mechanisches Positionieren von optischen Komponenten erfasst. Die Brechkraft einer Flüssiglinse kann zwischen -15 und +35 Dioptrien, bevorzugt zwischen -5 und +15 Dioptrien, besonders bevorzugt zwischen -2.2 und +2.2 Dioptrien variieren. Erfindungsgemäß kann es bereits ausreichend sein, wenn die Brechkraft der Flüssiglinse zwischen -2.2 und +2.2 Dioptrien variiert, um eine Fokussierung in einem weiten bestimmten Bereich, etwa in einem Bereich von +/- 25 wellenoptischen Schärfentiefen, zu erreichen. Denkbar sind aber auch größere Brechkraftvariationen - wie die oben genannten. Solange die Werte der Brechkraft als klein angesehen werden können, skaliert der erforderliche Brechkraftbereich linear mit dem bestimmten Fokussierungsbereich. So kann mit einer variierenden Brechkraft der Flüssiglinse von -4.4 bis +4.4 Dioptrien eine Fokussierung in einem Bereich von +/- 50 wellenoptischen Schärfentiefen erfasst werden. Grundsätzlich ist bei der Fokussierung zu bedenken, dass bereits eine Verlagerung der Objektebene um ein Intervall $b = 2 \cdot b_{0.80}$, d.h. der doppelten wellenoptischen Schärfentiefe, in einem Idealsystem den wesentlichen Verlust der Abbildungsleistung bedingt, wo die Strehlsche Definitionshelligkeit einen Wert von nur DEH ~ 35% erreicht. In der Domäne der Kontrastübertragung bedeutet das eine Verlagerung der von einem Idealsystem mit A = 0.50 und $\lambda$ = 500 nm der noch auflösbaren hohen Ortsfrequenzen (z.B. bei dem Kriterium der Modulation von einer Modulationstransferfunktion, MTF, = 10 %) von $R_{10\%}$ = 1608 Lp/mm (Linienpaare pro Millimeter) zu niedrigen $R_{10\%}$ = 738 Lp/mm. Dieser Fokusverlust ist in der Beobachtungspraxis beugungsbegrenzter Systeme sehr deutlich.

Eine Scharfstellung bzw. (exakte) Fokussierung in einem beugungsbegrenzten System ist dann erreicht worden, wenn für die Hauptfarbe (z.B. die grüne Linie "e" im spektralen VIS-Bereich) der Wert DEH > 80% erreicht wurde.

Besonders bevorzugt ist das erfindungsgemäße Mikroskopobjektiv derart ausgestaltet, dass eine Fokussierung im Bereich von mindestens +/- 20 wellenoptischen Schärfentiefen, besonders bevorzugt im Bereich von mindestens +/- 25 wellenoptischen Schärfentiefen durch eine Brechkraftvariation der Flüssiglinse im Bereich zwischen -2.2 und +2.2 Dioptrien bewirkt wird. Wie später noch im Detail gezeigt, kann dadurch die geringe Variation der Brechkraft der sog. Farbortsfehler minimiert werden.

Weitere optische Komponenten, die als einzelne Linsen oder als durch eine Kombination aus mehreren Linsen zu einer Linsengruppe ausgestaltet sind, können für die Farbkorrektur oder zur Bildfeldebnung des abgebildeten Bildes beitragen. Hierzu sind u.a. optische Komponenten gemeint, die zumindest Teile eines Achromaten, Fluoritobjektivs, Apochromaten oder Planobjektivs, d.h. eines Planachromaten oder Planapochromaten, bilden. Linsengruppen können aus mehreren miteinander verbundenen Einzellinsen geschaffen sein. Der Verbund von Einzellinsen erfolgt an jeweils zueinander ausgerichteten Flächen zweier Linsen, die einen identischen oder ähnlichen Krümmungsradius aufweisen, z.B. durch Verkittung oder Ansprengen der Linsenflächen und dem anschließenden Zusammenfügen dieser Flächen. Typischerweise werden Linsen zur Verwendung im sichtbaren (VIS-)Spektralbereich aus optischen Gläsern, anisotropen Kristallen (z.B. CaF2, LiF, BaF2, $KAl(SO_4)_2 \cdot 12H_2O$, $SrTiO_3$), geschmolzenen Quarz oder auch Kunststoffen wie Polycarbonaten, Polymethylmethacrylaten oder Cyclo-Olefin-(Co)polymeren hergestellt.

Mit der Autofokussierbarkeit des Mikroskopobjektivs ist die automatisierte Einstellung mindestens einer Komponente des optischen Systems gemeint, um das Objektiv auf eine bestimmte Schärfeebene einzustellen. Dazu gehört auch der Wechsel von einer Schärfeebene zu einer anderen. Im vorliegenden Fall ist insbesondere die Flüssiglinse für die Einstellung der Schärfeebene zuständig, um die Vorteile der schnellen und präzisen Fokussierung voll zu entfalten. Entscheidend ist, dass dabei die Flüssiglinse Teil eines stationären Systems ist. Die Lage der Linsen im optischen System bleibt also unverändert, insbesondere die Position der Flüssiglinse ändert sich nicht. Vielmehr erfolgen Variationen der Brechkraft im Wesentlichen durch die erzeugte Formänderung der Linse unter dem Einfluss eines elektrischen Feldes.

Bevorzugt umfasst das Mikroskopobjektiv eine Aperturblende, kurz APE, als weitere Komponente des optischen Systems, wobei die Flüssiglinse in der direkten Nähe der Aperturblende angeordnet ist.

Im Sinne der Erfindung wird unter "direkter Nähe" verstanden, dass sich die Flüssiglinse so nah bei der Aperturblende befindet, dass es keinen wesentlichen funktionalen Unterschied ergibt, ob die beiden Bauteile Kontakt haben oder nicht. Darüber hinaus legt die "direkte Nähe" auch gewisse räumliche Grenzen fest, das heißt speziell, die zwei betrachteten Komponenten müssen direkt benachbart oder direkt angrenzend sein.

Als Aperturblende sind jegliche (optische) Komponenten gemeint, die dergestalt sind, in das optische System eingekoppelte Lichtstrahlen bzw. Lichtbündel entlang der um die optische Achse aufgespannten Querschnittsfläche zu bestimmen. Aperturblenden nehmen u.a. Einfluss auf die Bildhelligkeit und die Schärfentiefe.

Auf Grund der direkten Nähe der Flüssiglinse zur Aperturblende werden Abbildungsfehler, wie chromatische oder sphärische Aberration, Astigmatismus und/oder Bildfeldwölbung und Verzeichnung, trotz variierender Brechkraft der Flüssiglinse ausreichend korrigiert, um eine sowohl scharfe als auch im Wesentlichen verzerrungsfreie Abbildung zu erhalten. Mit anderen Worten, dadurch, dass die Flüssiglinse in direkter Nähe zur Aperturblende angeordnet ist, bleibt die Abbildungsleistung trotz Variabilität der Brechkraft im Wesentlichen erhalten.

Besonders bevorzugt ist die Flüssiglinse in einem Bereich des optischen Systems angeordnet, in dem die in das optische System einkoppelbaren Lichtbündel am stärksten eingeschnürt sind. Allgemeiner kann auch gefordert werden, dass die Flüssiglinse in einem Bereich der engsten Einschnürung der Umhüllenden aller Strahlen im System (auch als Pharoidstrahlen bezeichnet) angeordnet ist. Dadurch, dass die Flüssiglinse am Ort der stärksten Einschnürung des Strahlenbündels angeordnet ist, bleibt der erforderliche Korrektionszustand des Mikroskopobjektivs auch bei einer Umfokussierung in einem weitgehenden Maße erhalten und eine stets hohe Abbildungsqualität des Objektivs lässt sich trotz variierender Brechkraft der Flüssiglinse erreichen.

Vorteilhafterweise ist wenigstens eine der mehreren optischen Komponenten des optischen Systems als Linse oder Linsengruppe dergestalt ausgebildet, dass ein durch das Mikroskopobjektiv erzeugtes Bild eine Bildfeldebnung und eine anastigmatische Korrektion erhält.

Bevorzugt ist eine der mehreren optischen Komponenten des optischen Systems als erster Meniskus ausgebildet. Zweckmäßig ist, wenn die Linse oder Linsengruppe, die dergestalt ausgebildet ist, dass ein durch das Mikroskopobjektiv erzeugtes Bild eine Bildfeldebnung und eine anastigmatische Korrektion erhält, als erster Meniskus ausgestaltet ist.

Weiterhin ist es von Vorteil, wenn die Flüssiglinse, bezogen auf die Propagationsrichtung eines in das optische System einkoppelbaren Lichtbündels, dem Meniskus und allen anderen optischen Komponenten nachgeschaltet ist. Besonders bevorzugt ist die Flüssiglinse so im optischen System angeordnet, dass sie eine als Aperturblende natürliche Lage in diesem System einnimmt.

In dem optischen System des Mikroskopobjektivs ist mit der natürlichen Lage einer Aperturblende diejenige Lage gemeint, die sich dadurch auszeichnet, eine telezentrische Lichtfortpflanzungsperspektive, d.h. eine Perspektive bei kollimierten Hauptstrahlen bzw. kollimierten Schwerstrahlen im Falle geometrischer Vignettierung, in dem Objektraum des Systems zu gewährleisten. Eine telezentrische Lichtfortpflanzungsperspektive wird verwendet, um Objekte ohne perspektivische Verzerrung zu erfassen. Ferner bleibt der Abbildungsmaßstab bei axialer Objektverschiebung unverändert, so dass das Bild unabhängig vom Objektabstand immer gleich groß bleibt. Die telezentrische Lichtfortpflanzungsperspektive ist mittels (optischer) Komponenten, insbesondere der Flüssiglinse, in der bildseitigen Brennebene realisierbar.

Es ist ferner zweckmäßig, wenn eine der mehreren optischen Komponenten des optischen Systems als zweiter Meniskus ausgebildet ist und die Flüssiglinse zwischen dem ersten und zweiten Meniskus angeordnet ist. Dadurch lässt sich die Bildfeldebnung und anastigmatische Korrektion des optischen Systems weiter verbessern.

Besonders bevorzugt sind der erste und zweite Meniskus derart ausgerichtet, dass in einem Brechungszustand der Flüssiglinse die Apertur- und Hauptstrahlen eines in das optische System einkoppelbaren Lichtbündels so geführt werden, dass der Aperturstrahlwinkel und der Hauptstrahlwinkel an der Lichtaustrittsfläche des ersten Menikus gleich oder ungefähr gleich sind mit dem Aperturstrahlwinkel und dem Hauptstrahlwinkel an der Lichteintrittsfläche des zweiten Meniskus. Dies soll also in einem Bereich nichtverschwindender Brechkraft der Flüssiglinse angestrebt werden, der erforderlich ist, um eine Fokussierung in einem bestimmten vorgegebenen Bereich, wie etwa mindestens +/- 25 wellenoptischen Schärfentiefen, zu erreichen.

Für die Definition der optischen Begriffe Aperturstrahl und Hauptstrahl ist zunächst anzunehmen, dass jeder Objektpunkt in der Objektebene das Licht in seinen vorderen Halbraum im Sinne eines Selbstleuchters sendet, womit die Rolle der Strahlenbegrenzung vollständig dem optischen System des Mikroskopobjektivs zukommt. Befindet sich der Objektpunkt auf der Systemachse, so begrenzt die Aperturblende im System die Weite des durch das System noch akzeptierten Lichtkonus. Das Maß dieser Weite wird durch den maximalen Winkel der Mantellinie, bzw. im Meridionalschnitt durch den Winkel u[°] des Aperturstrahls mit der optischen Achse angegeben. Der Aperturstrahl verläuft am Rand der Aperturblende. Für einen jenseits der Systemachse liegenden Objektpunkt erfolgt ebenfalls die Strahlenbegrenzung im System. Bei dem homozentrischen Lichtkonus wird seine Symmetrieachse gefunden und im System bis zum Schnitt mit der optischen Achse verfolgt. Der Ort, wo die Achsen sich schneiden - dies gilt für alle Objektpunkte - ist die Mitte der Aperturblende. Die durch die Mitte der Aperturblende durchgehenden Strahlen sind die Hauptstrahlen. Im Meridionalschnitt beschreibt der Winkel w[°] den Winkel des Hauptstrahls mit der optischen Achse des Systems.

Durch die im vorletzten Absatz angegebenen Anforderungen an die Menisken wird gefordert, dass die Brechkraftveränderungen der Flüssiglinse in einer Art erfolgen sollen, um ein Minimum der Strahlenablenkung aber auch eine symmetrische Strahlenablenkung um den brechkraftlosen Zustand zu realisieren. Das bedeutet, dass selbst in der Stellung maximaler positiver oder negativer Brechkraft der Flüssiglinse, die zur Fokussierung in dem bestimmten vorgegebenen Bereich erforderlich ist, der Verlauf der Aperturstrahlen wenig, insbesondere aber der Verlauf der Hauptstrahlen kaum seine Trajektorie ändern soll. Je besser die Werte der Aperturstrahl-und Hauptstrahlwinkel am ersten und zweiten Meniskus im sowohl brechkraftlosen Zustand als auch im Brechungszustand der Flüssiglinse übereinstimmen, desto geringer sind die Aberrationseffekte des Mikroskopobjektivs im gesamten Fokussierungsbereich der Flüssiglinse.

Wie oben bereits dargetan, ist die Flüssiglinse brechkraftlos/in einem brechkraftlosen Zustand, wenn bei einer spezifischen Spannung die gemeinsame Grenzfläche der Flüssigkeiten einen unendlichen Krümmungsradius hat. Mit anderen Worten ist mit dem brechkraftlosen Zustand der Flüssiglinse ein Referenzzustand gemeint, für welchen auch die bekannten geometrischen Eigenschaften der Strahlenwinkel vor und hinter dem Komplex der Flüssiglinse, aus z.B. vier planparallelen Platten, herrschen. Demgegenüber befindet sich die Flüssiglinse in einem Brechungszustand, wenn kein brechkraftloser Zustand vorliegt, d.h. die spezifische Spannung ist so gewählt, dass die gemeinsame Grenzfläche der Flüssigkeiten einen endlichen Krümmungsradius aufweist.

Besonders bevorzugt sind die konkaven Flächen des ersten und zweiten Meniskus einander zugewandt. Damit lässt sich eine bezüglich der chromatischen Vergrößerungsdifferenz, kurz CVD, definierte sowie vom Asymmetriefehler weitgehend befreite Abbildung realisieren. Es ist von Vorteil, wenn wenigstens der erste und/oder zweite Meniskus durch eine Einzellinse gebildet ist. Um die Freiheiten beim Design des optischen Systems jedoch zu erhöhen, sieht eine vorteilhafte Weiterbildung insoweit vor, dass der erste und/oder zweite Meniskus als Kittglied aus wenigstens zwei miteinander verkitteten Linsen ausgebildet ist.

Zweckmäßigerweise ist das optische System derart ausgebildet, dass der Durchmesser der Austrittspupille dem 0.8 bis 1.3-fachen des Durchmessers des lichten optischen Durchlasses der Flüssiglinse entspricht. Hierbei werden die durch das System bzw. seine Teile gegebenen Bilder der Aperturblende im Objekt- und Bildraum als Eintritts- und Austrittspupille, kurz EP und AP, bezeichnet. Stellt sich die Flüssiglinse in Propagationsrichtung des eingekoppelten Lichtes als letzte Komponente im System dar und übernimmt sie die Funktion der Aperturblende so bestimmt der lichte Durchmesser der Flüssiglinse den Durchmesser der Austrittspupille des Objektivs $D_{AP}$. Wird die Flüssiglinse hingegen innerhalb eines Systems eingebaut und einkorrigiert, so ist die Lage und die Größe der Objektiv-Austrittspupille durch den Abbildungsvorgang von der Aperturblende zu ihrem Bild und damit zu ihrer Austrittspupille durch den dioptrischen Teil des optischen Systems, der zwischen der Aperturblende und dem Bildraum steht, bestimmt. Eine primäre Größe dieses o.g. Abbildungsvorgangs ist der Abbildungsmaßstab, mit dem der freie Durchmesser der Flüssiglinse $D_{APE}$ zum Durchmesser $D_{AP}$ der System-Austrittspupille transformiert wird.

Weiter ist es von Vorteil, wenn das optische System eine Frontgruppe aufweist, die innerhalb des optischen Systems der Objekt-/Präparatebene am nächsten angeordnet ist. Die Frontgruppe kann eine oder mehrere optische Komponenten umfassen. Im Rahmen der Synthese des optischen Systems des Mikroskopobjektivs besteht die Funktion der Frontgruppe vor allem darin, den großen Aperturwinkel des Lichtbündels des Objektraumes im weiteren Verlauf zu den optischen Komponenten, die der Frontgruppe nachgeschaltet sind, wesentlich zu verringern.

Besonders bevorzugt ist eine optische Komponente des optischen Systems dergestalt, dass ein durch das Mikroskopobjektiv erzeugtes Bild eine sphärochromatische Korrektion erhält. Vorteilhaft ist auch, wenn der Frontgruppe in Propagationsrichtung eines in das optische System einkoppelbaren Lichtbündels (kurz: Lichtrichtung) wenigstens eine optische Komponente nachgeordnet ist, die für eine sphärochromatische Korrektion des optischen Systems ausgebildet ist. Beispielhaft kann der Frontgruppe in Lichtrichtung eine Linsengruppe nachgeordnet sein, umfassend eine Kombination zweier verkitteter oder freistehender Linsen, z.B. eine bi-konvexe und eine konkav-konvexe Linse.

Weiterhin ist es zweckmäßig, wenn das Mikroskopobjektiv als Planachromat oder Planapochromat ausgebildet ist.

Im spektralen VIS-Bereich realisieren Planachromate eine planastigmatische Abbildung einer definierten Feldgröße im Spektrum F'C' bzw. FC ausgewiesen durch die sog. spektrale Marechalbreite. Die Marechalbreite bezeichnet die spektrale, durch die kürzeste und die längste Wellenlänge definierte stetige Bandbreite, für welche ein auf den maximalen DEH-Wert bei der Hauptfarbe für den Achsenpunkt fokussiertes Objektiv noch eine beugungsbegrenzte Leistung (DEH = 80%) zeigt. Die Parameter dieser Bewertung sind die Wellenlänge und die Feldkoordinate.

Durch den höheren Aufwand der Funktionselemente im System erweitert ein Planapochromat diese Korrektion spektral und realisiert eine spektrale Marechalbreite von der Linie g = 435.8343 nm bis in die Linie C' = 643.8469 nm oder C = 656.2725 nm.

Zusätzlich wird der Korrektion des Gaußfehlers (Sphärochromasie) sehr viel Aufmerksamkeit geschenkt, insbesondere bei Planapochromaten mittlerer und hoher numerischer Apertur.

Ein zweiter Aspekt der Erfindung betrifft ein Mikroskop, das das vorstehend beschriebene Mikroskopobjektiv umfasst.

Im Folgenden werden bevorzugte Ausführungsbeispiele der vorliegenden Erfindung anhand der nachfolgenden Figuren beschrieben. Es zeigen:

- Fig. 1 einen Querschnitt eines Ausführungsbeispiels des erfindungsgemäßen Mikroskopobjektivs,
- Fig. 2 schematisch einen Teil des optischen Systems des Mikroskopobjektivs gemäß Fig. 1 im Bereich der Aperturblende und
- Fig. 3 eine schematische Seitenansicht eines Mikroskops, welches das erfindungsgemäße Mikroskopobjektiv umfasst.

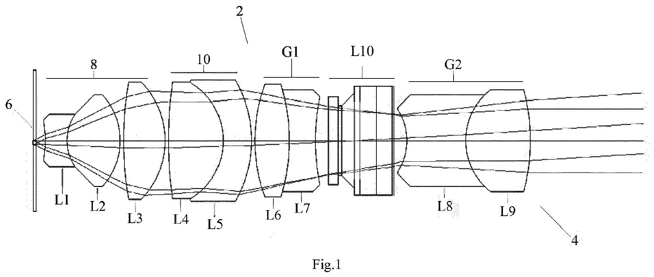

In Fig. 1 ist eine Querschnittsansicht eines Ausführungsbeispiels des erfindungsgemäßen autofokussierbaren Mikroskopobjektivs 2 dargestellt, das ein als Unendlich-Optik ausgebildetes optisches System 4 aufweist. Das optische System umfasst zudem eine Mehrzahl optischer Komponenten, die jeweils durch eine Linse oder Linsengruppe gebildet sind.

Erfindungsgemäß weist das optische System 4 zur Autofokussierung eine Flüssiglinse L10 auf. Die Flüssiglinse L10 ist zwischen einer ersten Linsengruppe G1 und einer zweiten Linsengruppe G2 angeordnet. Eine Präparatebene des Mikroskops ist in Fig. 1 mit dem Bezugszeichen 6 bezeichnet. Die Propagationsrichtung des von der Präparatebene ausgehenden Lichts (kurz: Lichtrichtung) verläuft in Fig. 1 von links nach rechts. Dementsprechend ist die Linsengruppe G1 in Lichtrichtung vor der Flüssiglinse L10 und die Linsengruppe G2 in Lichtrichtung hinter der Flüssiglinse L10 angeordnet.

Das Mikroskopobjektiv 2, das nachfolgend auch kurz als Objektiv 2 bezeichnet wird, weist eine aus drei Linsen L1, L2 und L3 zusammengefasste Frontgruppe 8 auf. Die Frontgruppe 8 ist der Präparatebene 6 gegenüber den anderen optischen Komponenten des optischen Systems 4 am nächsten angeordnet und dient im Wesentlichen dazu, den Aperturwinkel des von der Präparatebene 6 eintretenden Lichtbündels mit Hilfe der bi-konkaven Linsen L1 und der bi-konvexen Linse L2 zu weiten und mit der plan-konvexen oder bi-konvexen Linse 3 weiter zu bündeln. Die Linsen L1 und L2 sind miteinander verkittet, während die Linse L3 als Einzellinse ausgebildet ist. Die Linsen L1 und L2 können jedoch auch unverbunden sein.

Der Frontgruppe 8 ist in Lichtrichtung eine Linsengruppe 10 nachgeordnet. Die Linsengruppe 10 umfasst zwei miteinander verkittete Linsen L4, L5 und dient vor allem der sphärochromatischen Korrektion des Objektivs 2.

Weiterhin sind der Linsengruppe 10 in Lichtrichtung die Linsengruppen G1 und G2 nachgeordnet.

In dem in Figur 1 gezeigten Mikroskopobjektiv 2 bilden die Frontgruppe 8, die Linsengruppen 10, G1 und G2 sowie die Flüssiglinse L10 zusammen ein stationäres optisches System 2. Das heißt, keine der genannten Komponenten braucht zur Fokussierung mechanisch verschoben / transliert zu werden.

Im gezeigten Ausführungsbeispiel sind die Linsengruppen G1 und G2 jeweils als Meniskus ausgebildet, wobei die Linsengruppe G1 miteinander verkittete Linsen L6 und L7 und die Linsengruppe G2 miteinander verkittete Linsen L8 und L9 umfasst. Es ist von Vorteil, wenn die konkaven Flächen der Menisken - wie in Fig. 1 gezeigt -, die die Linsengruppen G1 und G2 bilden, einander zugewandt sind. G1 und G2 dienen somit vor allem der Bildfeldebnung und der astigmatischen Korrektion des Objektivs 2.

Eine Flüssiglinse L10 ist zwischen den Linsengruppen G1 und G2 positioniert. Entlang eines in das optische System 4 eingekoppelten Lichtbündels ist die Flüssiglinse L10 insbesondere an dem Ort der engsten Einschnürung der Umhüllenden aller Strahlen im System (auch als Pharoidstrahlen bezeichnet) angeordnet. Am Ort der stärksten Einschnürung befindet sich eine natürliche Aperturblende, APE, (nicht dargestellt) des Objektivs 2. Die natürliche Aperturblende weist jenen Ort im optischen System 4 aus, in dem sich die natürliche Lage der Aperturblende im optischen System eines Mikroskopobjektivs befindet. Konkret bedeutet dies, dass die Aperturblende eine Lage einnimmt, welche eine telezentrische Lichtfortpflanzungsperspektive im Objekt-/Präparatsraum des Objektivs gewährleistet, d.h. die Kollimation der Hauptstrahlen bzw. der Schwerstrahlen im Falle der geometrischen Vignettierung im System. Im vorliegenden Fall kann die Aperturblende in Lichtrichtung vor oder nach der Flüssiglinse angeordnet sein. Es ist auch möglich, dass die Aperturblende durch die Flüssiglinse selbst oder durch eine oder mehrere Komponenten der Flüssiglinse gebildet wird.

Alternativ zum Ausführungsbeispiel gemäß Fig. 1 kann auch ein einzelner, in Lichtrichtung vor der Flüssiglinse L10 angeordneter Meniskus vorgesehen sein, wobei die Flüssiglinse L10 dann die in Lichtrichtung letzte optische Komponente des optischen Systems 4 ist und den Ort der natürlichen Aperturblende APE des optischen Systems 4 bildet.

Die Autofokussierung des Objektivs 2 erfolgt durch Veränderung der Brechkraft der Flüssiglinse L10. Dazu kann diese entsprechend angesteuert werden.

Die Flüssiglinse L10 umfasst z.B. eine aus zwei Glasplatten gebildete Kammer, die mit zwei sich nicht mischenden transparenten Flüssigkeiten/flüssigen Medien gefüllt ist. Ferner weisen diese im direkten Kontakt stehenden Flüssigkeiten/flüssigen Medien unterschiedliche Brechungsindizes und elektrische Eigenschaften auf. Die erste Flüssigkeit kann z.B. aus einem Öl und die zweite Flüssigkeit aus einem anderen Öl oder Wasser bestehen. Für ähnliche, insbesondere identische Dichten der Flüssigkeiten ist die Flüssiglinse besonders robust gegenüber mechanischen Stößen. Durch das Anlegen eines elektrischen Feldes, das von den Flüssigkeiten benachbarten Elektroden ausgeht und das besagte Flüssigkeiten durchsetzt, verändern diese den Krümmungsradius, welcher sich aus ihren gemeinsamen Kontakt- bzw. Grenzflächen bildet, und somit auch ihre Brechkraft bzw. ihre Brennweite (sog. Elektrobenetzung; engl.: electrowetting). Auf diese Weise lassen sich die optische Funktionen wie eine (Um-)Fokussierung oder eine Brennweiteneinstellung schnell und ohne mechanische Bewegung der Flüssiglinse umsetzen. Das Anlegen eines bestimmten elektrischen Feldes erfolgt mit Hilfe eines Controllers/Drivers, mit dem sich die angelegte Spannung an die Elektroden steuern lässt.

Bei der Flüssiglinse L10 kann es sich beispielsweise um eine Flüssiglinse handeln, wie sie von der französischen Varioptic S.A. unter der Bezeichnung "Arctic 39N0" vertrieben wird. Eine solche Flüssiglinse weist einen lichten optischen Durchlass mit einem Durchmesser von 3.9 mm auf. Unter dem lichten optischen Durchlass der Flüssiglinse wird die im Sinne der Lichtbrechung wirksame optische Fläche der Flüssiglinse verstanden. Zudem ist eine Veränderung der Brechkraft von -5 Dioptrien bis +15 Dioptrien umsetzbar. Ein mit einer solchen Flüssiglinse ausgestattetes Mikroskopobjektiv kann damit, insbesondere bei einer Brechkraftvariation von +/- 2.2 Dioptrien, über einen Bereich von mindestens ds = +/- 25 · $b_{0.80}$ ($b_{0.80}$ ist die bereits weiter oben definierte wellenoptische Schärfentiefe) umfokussiert werden. Mit der wellenoptischen Schärfentiefe ist der Defokussierungsweg für ein aberrationsfreies Idealsystem gemeint, der einen Abfall der Helligkeit auf 80% verursacht. Die Arctic 39N0 ist dazu geeignet, eine entsprechend dem Abbildungszweck eines Mikroskopobjektivs angemessene Abbildungsleistung zu liefern. Das Mikroskopobjektiv mit der Arctic 39N0-Flüssiglinse erzeugt eine 45-fache Vergrößerung bei einer numerischen Apertur von A = 0.50. Dadurch, dass im Sinne der Erfindung die Flüssiglinse in der direkten Nähe der Aperturblende, insbesondere am Ort der stärksten Einschnürung der Strahlenbündel angeordnet ist, bleibt der erforderliche Korrektionszustand des Mikroskopobjektivs auch bei einer Umfokussierung in einem weitgehenden Maße erhalten. Mit anderen Worten bedeutet dies eine stets hohe Abbildungsqualität des Objektivs trotz variierender Brechkraft der Flüssiglinse. Nach alledem ermöglicht die Verwendung der Flüssiglinse unter den vorstehend genannten Bedingungen erstmals ein Mikroskoobjektiv bereitzustellen, das auf einfache, schnelle und präzise Art und Weise umfokussiert werden kann.

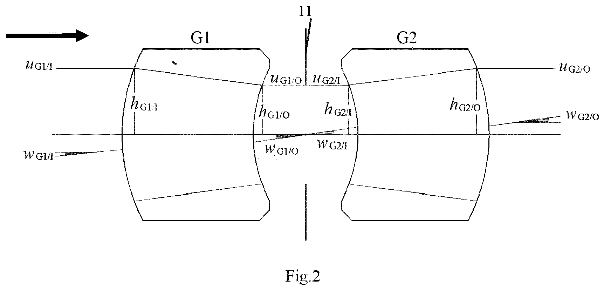

In Fig. 2 ist schematisch ein Teil des optischen Systems des Mikroskopobjektivs gemäß Fig. 1 im Bereich der Aperturblende 11 gezeigt. Die in Fig. 2 verwendeten Bezugszeichen entsprechen soweit denjenigen der Fig. 1. Die Linsengruppe G1 ist im vorliegenden Fall in Lichtrichtung direkt bzw. in direkter Nähe vor der Aperturblende 11 und Flüssiglinse (nicht dargestellt) angeordnet; die Linsengruppe G2 befindet sich hingegen in Lichtrichtung direkt bzw. in direkter Nähe hinter der Aperturblende 11 und Flüssiglinse (nicht dargestellt). Linsengruppen G1 und G2 können eine oder mehrere Linsen umfassen. Die G1 und G2 bildenden Linsen können verkittet und/oder freistehend sein.

Zur besseren Übersicht ist die Lichtrichtung durch einen Pfeil indiziert.

Zudem haben die in Fig. 2 verwendeten Abkürzungen die folgende Bedeutung:

- $u_x$: Aperturstrahlwinkel an der Stelle x;
- $w_y$: Hauptstrahlwinkel an der Stelle y;
- $h_z$: Aperturstrahlhöhe an der Stelle z;
- G1/I: Ortsbestimmung, hier Eingang der Linsengruppe G1;
- G1/O: Ortsbestimmung, hier Ausgang der Linsengruppe G1;
- G2/I: Ortsbestimmung, hier Eingang der Linsengruppe G2;
- G2/O: Ortsbestimmung, hier Ausgang der Linsengruppe G2.

Im Folgenden wird die bevorzugte Lage der Flüssiglinse im optischen System des erfindungsgemäßen Mikroskopobjektivs kurz dargelegt. Hierbei wird auf das Problem Bezug genommen, dass Flüssiglinsen typischerweise hyperchromatische Linsen sind. Eine hyperchromatische Linse zeichnet sich dadurch aus, dass sie eine erhöhte chromatische Aberration aufweist. Die Chromasie einer Linse ist durch ihre Brechkraft und die Dispersion ihres Mediums (bzw. Abbe-Zahl $v_d$) bestimmt. Je größer die Dispersion des Mediums (bzw. je kleiner seine Abbe-Zahl) ist, desto größer ist die Chromasie. Aufgrund dieser Eigenschaften führen hyperchromatische Flüssiglinsen einen variablen und zum Teil großen Aberrationsbeitrag, insbesondere den Farbortsfehler und Farbvergrößerungsfehler in das System ein. Für eine hohe Abbildungsleistung ist somit eine entsprechende Gesamtsystemkorrektur (d.h. eine Korrektur gegen auftretende Aberrationen nach optischer Transformation) erforderlich ist. Daher soll an dieser Stelle u.a. mit Hilfe der folgenden Überlegungen der Einfluss der variablen Brechkraft der Flüssiglinse auf den Farbortsfehler des Systems beurteilt und minimiert sowie die Bedingung für das Verschwinden des Variation des Farbvergrößerungsfehlers aufgestellt werden.

Für die Aperturstrahlhöhe vor- und hinter der Linsengruppe G1 gilt: $h_{G1/I} > h_{G1/O}$.
Für die Aperturstrahlhöhe vor- und hinter der Linsengruppe G2 gilt: $h_{G2/I} < h_{G2/O}$.

Im Aperturblendenraum zwischen G1 und G2 sind drei folgende Situationen möglich:

1. $h_{G2/I} < h_{G1/O}$, d.h. ein in Lichtrichtung konvergentes Aperturstrahlenbündel mit $u_{G1/O} < 0$;
2. $h_{C2/I} = h_{G1/O}$, d.h. ein in Lichtrichtung kollimiertes Aperturstrahlenbündel mit $u_{G1/O} = 0$;
3. $h_{G2/I} > h_{G1/O}$, d.h. ein in Lichtrichtung divergentes Aperturstrahlenbündel mit $u_{G1/O} > 0$.

Dabei dürfen im Raum vor der Linsengruppe G1 die Aperturstrahlen in Lichtrichtung:

- kollimiert sein mit $u_{G1/I} = 0$;
- konvergent sein mit $u_{G1/I} < 0$;
- divergent sein mit $u_{G1/I} > 0$.

Im Raum hinter Linsengruppe G2 dürfen die Aperturstrahlen in Lichtrichtung:

- kollimiert sein mit $u_{G2/O} = 0$;
- konvergent sein mit $u_{G2/O} < 0$;
- divergent sein mit $u_{G2/O} > 0$.

Befindet sich die Aperturblende 11 hinter der Linsengruppe G1 im Bildraum des Objektivs, so ist die Linsengruppe G2 nicht vorhanden und es gelten die entsprechenden o.g. Bedingungen für G1 und Aperturblende 11.

Integriert rechnerisch in das optische System des Mikroskopobjektivs ist die geometrisch-optische Struktur der Flüssiglinse verglichen mit den entsprechenden Dimensionen der Linsengruppen G1 und G2 keine dünne Komponente mehr. Dies ist insbesondere für die Arctic 39N0 zu beachten, da die Vertexlänge ("Dicke") der Flüssiglinse, d.h. der Abstand zwischen dem ersten und dem letzten Scheitelpunkt, mit ca. 3.65 mm in etwa dem freien Durchmesser dieser Linse entspricht. Die folgenden Bedingungen für den Verlauf der Aperturstrahlen und der Hauptstrahlen sollen in einem Bereich nichtverschwindender Brechkraft der Flüssiglinse angestrebt werden, der erforderlich ist, um eine Fokussierung in einem bestimmten vorgegebenen Bereich, wie etwa mindestens +/- 25 wellenoptischen Schärfentiefen, zu erreichen:

1. $u_{G1/O}$ gleich oder ungefähr gleich $u_{G2/I}$ für die Aperturstrahlen im Raum der Aperturblende 11;
2. $w_{G1/O}$ gleich oder ungefähr gleich $w_{G2/I}$ für die Hauptstrahlen im Raum der Aperturblende 11.

Die Erfüllung dieser Bedingungen garantiert eine gute Aberrationscharakteristik des Objektivs im gesamten Bereich der Fokussierung.

Die Flüssiglinse ist ferner eine komplexe optische Komponente, die aus vier Elementen und drei optischen Medien bestehen kann. Die Flüssiglinse Arctic 39N0 weist eine durch zwei dünne Glasplatten gebildete Kammer auf. Dabei nehmen die Glasplatten die Funktion des Eintritts- und Austrittsfensters ein. Entlang der optischen Achse der Linse bzw. der Normalen der genannten Fenster sind nebeneinander zwei Öle als optische Flüssigkeiten mit unterschiedlichem Brechungsindex $n_d$ und Dispersion (bzw. Abbe-Zahl) $v_d$ angeordnet. Das erste Öl ist mit PC413B bezeichnet, umfassend $n_d = 1.38417$ und $v_d = 60.45$, wohingegen das zweite Öl mit H527 bezeichnet ist, umfassend $n_d = 1.50635$, $v_d = 39.95$. Das Eintritts- und Austrittsfenster werden aus dem technischen Glas D263T, umfassend $n_d = 1.52309$, $v_d = 55.42$, hergestellt.

Um den aus der Flüssiglinse bedingten chromatischen Einfluss in einem optischen System beurteilen zu können, ist es notwendig, einen die Aggregatwirkung aller der zuvor genannten optischen Komponenten definierenden Parameter zu ermitteln, der in bekannten analytischen Formeln einer Systemvorrechnung den Einfluss der Flüssiglinse auf die Aberrationen des gesamten optischen Systems sachlich zu beurteilen gestattet. Ein adäquater Parameter ist die "äquivalente Abbe-Zahl" $v_{äq}$.

Bei der Definition der äquivalenten Abbe-Zahl ist Folgendes zu beachten: Für jedes optische System, welches sich aus vielen optischen Komponenten zusammensetzt, wovon jede Komponente (Linse) aus einem definierten Medium besteht, das eine eigene Abbe-Zahl besitzt, lässt sich eine äquivalente Abbe-Zahl bestimmen.

Hierfür betrachten wir beispielhaft das Wellenlängen-Tripel der folgenden Fraunhofer-Linien: F' = 479.9914 nm; e = 546.0740 nm; C' = 643.8469 nm. Für jede dieser Fraunhofer-Linien kann die Systembrennweite, d.h. f'(F'), f'(e), f'(C'), berechnet werden (f' bezeichnet die bildseitige Brennweite). Für die Grenzlinien des Spektralintervalls kann ferner der Brennweitenunterschied wie folgt berechnet werden:

$$df' = f'(F') - f'(C').$$

Der relative Brennweitenunterschied ist gleich dem negativen Kehrwert der äquivalenten Abbe-Zahl $v_{äq}$ eines optischen Systems oder einer optischen Baugruppe im System:

$$df'/f'(e) = -1/v_{äq}.$$

Weiterhin gilt:

1. Die äquivalente Abbe-Zahl $v_{äq}$ sagt aus, welchen Wert die reguläre Abbe-Zahl $v(e)$ einer Einzellinse der Brennweite f'(e) haben müsste, um eine chromatische Eigenschaft zu besitzen, die jener des o.g. optischen Systems bzw. der Gruppe gleicht.

2. Die reguläre Abbe-Zahl eines optischen Mediums ist:

$$v(e) = \frac{n(e) - 1}{n(F') - n(C')}.$$

Mit diesem Ausdruck wird die "Dispersionskraft" eines optischen Mediums mit Brechungsindex n beschrieben. Die Differenz n(F') - n(C') ist die Hauptdispersion des optischen Mediums.

3. In chromatisch korrigierten Systemen spricht man von der Hauptwellenlänge (Hauptfarbe) und von einem achromatischen Wellenlängenpaar. Bei der Systemachromatisierung im VIS-Bereich gilt:

- die Fraunhofer-Linie e als die Hauptfarbe;
- die Fraunhofer-Linien F' und C' als das achromatische Wellenlängenpaar.

4. Für die Flüssiglinse Arctic 39N0 sind folgende Grenzwerte für Radius R und Brennweite f'(e) möglich (die grüne Fraunhofer-Linie "e" hat die Wellenlänge von 546.0740 nm):

- R ~ +3.59712 mm und f'(e) = +29.07988 mm (bzw. +34.4 Dpt.); f'(F') = 28.42240 mm; f'(C') = 29.914534 mm;
- R ~ -7.8100 mm und f'(e) = -63.13766 mm (bzw. -15.8 Dpt.); f'(F') = -61.71014 mm; f'(C') = -64.94984 mm.

Die äquivalente Abbe-Zahl der Arctic 39N0 beträgt somit $v_{äq}$ = 19.49; ihr Wert ist in jeder Linsenstellung bzw. für jede Linsenbrennweite gleich. Für andere Flüssiglinsen muss die äquivalente Abbe-Zahl jedoch nicht gleichbleibend sein. Damit gehört die Arctic 39N0 in den Bereich hyperchromatischer Komponenten. Eine weitere hyperchromatische Flüssiglinse stellt die "Arctic A316" dar; ihre äquivalente Abbe-Zahl beträgt $v_{äq}$ = 14.34. Grundsätzlich sind jedoch Flüssiglinsen mit einer äquivalenten Abbe-Zahl $v_{äq}$ von 14 bis 25 denkbar.

Die analytische Betrachtung (Startstufen der Synthese) und spätere Berechnung und Bewertung der Mikroskopobjektive können regulär in der Lichtrichtung aber auch entgegen dieser erfolgen. Im letzten Fall ist die letzte Linse des regulären Strahlenganges die erste in der Analyse.

Mithilfe der Definition der äquivalenten Abbe-Zahl ist es nun möglich, mathematisch den Einfluss der variablen Brechkraft der Flüssiglinse auf den Farbortsfehler des Systems zu charakterisieren und zu beurteilen sowie eine Bedingung für das Verschwinden der Variation des Farbvergrößerungsfehlers aufzustellen.

Der Farbortsfehler ist proportional zum longitudinalen Farbunterschied $\Delta s'_p$ des Bildortes. Zur Bestimmung einer Bedingung für die Achromasie des Bildortes in einem aus $p$ Elementen - zulässige Systemreduktion auf Äquivalentlinsen, d.h. Linsen verschwindender Dickezusammengesetzten System wird der folgende Zusammenhang betrachtet:

$$-\left(\frac{h_p}{h_1}\right)^2 \cdot \frac{\Delta s'_p}{s'^2_p} = \sum_{i=1}^{p}\left(\frac{h_i}{h_1}\right)^2 \cdot \frac{\Phi_i}{v_i} \ , \qquad\qquad (1a)$$

Dabei sind:

- $h_i$ die Aperturstrahlhöhe auf der Linse $i$;
- $s'_p$ die bildseitige Systemschnittweite;
- $\Delta s'_p$ der longitudinale Farbunterschied des Bildortes (z.B. $\Delta s'_p = s'_F - s'_C$);
- $\Phi_i$ die Brechkraft der Linse $i$;
- $v_i$ die Abbe-Zahl der Linse $i\,(z.B.\ v_i(e) = \frac{n_i(e)-1}{n_i(F')-n_i(C')})$ oder die äquivalente AbbeZahl.

Die Voraussetzung für die Systemachromasie für zwei Wellenlängen (z.B. $F'$ und $C'$) ist $\Delta s'_p$ = 0; in diesem Fall verschwindet der Farbortsfehler. Durch Minimierung von $\Delta s'_p$ kann also auch der Farbortsfehler minimiert werden. Dabei ist zu erkennen, dass dieser Korrektionszustand lediglich von den Werkstoffkennzahlen des Linsenmaterials und der Brechkraftverteilung der Linsen im System beeinflusst wird.

Aus Gleichung (1a) und unter Annahme, dass eine der Linsen die Flüssiglinse ist (z.B. Linse $k$), resultiert:

$$-\left(\frac{h_p}{h_1}\right)^2 \cdot \frac{\Delta s'_p}{s'^2_p} = \frac{\Phi_1}{v_1} + \left(\frac{h_2}{h_1}\right)^2 \cdot \frac{\Phi_2}{v_2} + \cdots + \left(\frac{h_k}{h_1}\right)^2 \cdot \frac{\Phi_k}{v_k} + \cdots + \left(\frac{h_p}{h_1}\right)^2 \cdot \frac{\Phi_p}{v_p} \qquad (1b)$$

Ist die Brechkraft der Linse $k$ variabel, wie in diesem Fall vorliegend, so ist der Ausdruck auf der rechten Seite der Gleichung (1b) nicht mehr konstant. Die Voraussetzung für die Kompensation des Farbortsfehlers im optischen System mittels Anpassung der Brechkräfte $\Phi_i$ und der Abbe-Zahlen $v_i$ bzw. der äquivalenten Abbe-Zahl $v_k$ im realen Objektiv ist nur für eine Brechkraft $\Phi_k$ der Fokussierungslinse gegeben.

Für alle anderen Werte von $\Phi_k$ führt die Flüssiglinse einen Farbortsfehler in die Abbildung ein. Daher ist es sinnvoll, die Variation der Brechkraft $d\Phi_k$ der hyperchromatischen Flüssiglinse ausreichend klein zu halten und trotzdem das angestrebte Ziel für einen genügend großen Hub der wirksamen Umfokussierung +/- dz in der Objektebene zu sorgen. Unter bestimmten Voraussetzungen reicht eine Brechkraftvariation von -2.2 bis +2.2 Dioptrien aus, um eine Umfokussierung über einen Bereich von +/- 25 wellenoptischen Schärfentiefen zu erreichen. Eine derartige Konstellation ist z.B. mit dem erfindungsgemäßen Mikroskopobjektiv bei Anwendung der Flüssiglinse Arctic 39N0 realisierbar.

Es wäre von Vorteil, wenn die äquivalente Abbe-Zahl $v_k$ der Flüssiglinse möglichst groß ist, um den entsprechenden Beitrag auf der rechten Seite der Gleichung (1b) zu unterdrücken. Flüssiglinsen mit einer äquivalenten Abbe-Zahl in einem Bereich zwischen 60 und 95, (eine äquivalente Abbe-Zahl von 95 ist z.B. bei CaF2, eine äquivalente Abbe-Zahl von mindestens 64, ist z.B. bei einem typischen Borkron-Glas (z.B. BK7) erreichbar), würden gerade zu einem unterdrückten Beitrag der Gleichung (1b) führen.

Der variable Farbvergrößerungsfehler im optischen System ist eine weitere Folge der Brechkraftvariation der hyperchromatischen Flüssiglinse. Jener kann charakterisiert werden durch folgende Formel:

$$\frac{\Delta y'}{y'} = \frac{s_1 \cdot s_{\mathrm{Pr1}}}{s_1 - s_{\mathrm{Pr1}}} \sum_{i=1}^{p} \frac{h_i}{h_1} \frac{h_{\mathrm{Pr},i}}{h_{\mathrm{Pr},1}} \frac{\Phi_i}{\nu_i} \tag{2a}$$

Hier bedeuten:

- $\Delta y'$ der laterale Farbunterschied der Bildgröße $y'_{\lambda 1}$-$y'_{\lambda 2}$, welcher beim Vorhandensein des Farbortsfehlers zu einem Hauptstrahldurchstoßkoordinatenunterschied für zwei Wellenlängen $\lambda 1$, $\lambda 2$ in einer definierten Bildebene verallgemeinert werden kann;

- $y'$ Referenzbildhöhe in Hauptfarbe, definiert durch z.B. $\lambda = \sqrt{\lambda 1 \cdot \lambda 2}$;
- $s_1$ Objektschnittweite, bezogen auf die erste Linse;
- $s_{\mathrm{Pr1}}$ Eintrittspupillenschnittweite, bezogen auf die erste Linse;
- $h_{\mathrm{Pr},i}$ Hauptstrahlhöhe auf der Linse $i$.

Ansonsten gilt die Nomenklatur der Gleichung (1a). Aus der Gleichung (2a) und unter Annahme, dass eine der Linsen die Flüssiglinse ist (hier: Linse $k$) resultiert:

$$\frac{\Delta y'}{y'} = \frac{s_1 \cdot s_{\mathrm{Pr1}}}{s_1 - s_{\mathrm{Pr1}}} \left( \frac{\Phi_1}{\nu_1} + \frac{h_2}{h_1} \frac{h_{\mathrm{Pr},2}}{h_{\mathrm{Pr},1}} \frac{\Phi_2}{\nu_2} + \ldots + \frac{h_k}{h_1} \frac{h_{\mathrm{Pr},k}}{h_{\mathrm{Pr},1}} \frac{\Phi_k}{\nu_k} + \ldots + \frac{h_p}{h_1} \frac{h_{\mathrm{Pr},p}}{h_{\mathrm{Pr},1}} \frac{\Phi_p}{\nu_p} \right) \tag{2b}$$

Für eine chromatisch ungestörte Autofokussierung - d.h. für $\Delta y'/y'$ = const. - ist ein konstanter Wert des Klammerausdrucks aus Gleichung (2b) entscheidend. Ändert aber die Brechkraft der Flüssiglinse $\Phi_k$ ihren Wert, so entsteht zwangsläufig ein dieser Brechkraftsänderung $d\Phi_k$ proportionaler Farbvergrößerungsfehler in der Abbildung. Der einzige Weg, den lateralen Farbunterschied $\Delta y'$ von der Variation $d\Phi_k$ unabhängig zu gestalten, ist das Anstreben von $h_{\mathrm{Pr},k}$ = 0.
Dies ist gleichbedeutend mit einem zentralen Durchgang des Hauptstrahls durch die Flüssiglinse, was durch die direkte Nähe der Aperturblende zur Flüssiglinse gewährleistet wird. Die bevorzugte Lage hat darüber hinaus den Vorteil, dass neben der Korrektion der chromatischen Aberrationen u.a. eine anastigmatische oder eine kompensatorische (periplanatische bzw. komplanatische) Bildfeldebnung erzielt werden kann.
Der Quotient $\Delta y'/y'$ wird auch als chromatische Vergrößerungsdifferenz, CVD, bezeichnet und bildet eine Fundamentalgröße eines Mikroskopsystems. Es wird unterschieden zwischen Systemen mit CVD = 0 - in der Domäne des Farbvergrößerungsfehlers kompensationsfreie Systeme - und solchen mit typischen Kompensationswerten der CVD von 0.8% bis 2%.
In einem Mikroskopsystem unendlicher Tubuslänge ist das im gewählten Kompensationssystem entsprechend korrigierte Tubuslinsensystem oder/und das Okular bzw. Projektiv für den optischen Vorgang der chromatischen Kompensation verantwortlich.
Integriert rechnerisch in das optische System des erfindungsgemäßen Mikroskopobjektivs ist die geometrisch-optische Struktur der Flüssiglinse verglichen mit den entsprechenden Dimensionen der Linsengruppen G1 und G2 keine dünne Komponente mehr. Ebenfalls fällt der Ort des engsten freien Durchmessers innerhalb der Flüssiglinse nicht mit dem Ort der in ihrer Sphärizität variablen Funktionsgrenzfläche zusammen, deren Scheitelpunktort entlang der optischen Achse zusätzlich mit ihrem Krümmungsradius variiert. Der engste freie Durchmesser tendiert in die Nähe des Eintritts- oder Austrittsfensters der Flüssiglinse verschoben zu sein. Das optische System kann mathematisch berechnet werden, wobei sich herausstellt, dass entscheidend bei der Berechnung des Systems die analytische Betrachtung der Aberrationen der ersten und der dritten Ordnung (gemäß der sog. Seidel-Theorie) ist. Mithilfe der Berechnung des Systems kann schließlich eine strenge geometrisch-optische Korrektion des Gesamtsystems in Bezug auf unterschiedliche Konfigurationen der Fokussierung vorgenommen werden; darüber hinaus ist damit auch eine Klassifizierung des Mikroskopobjektivs anhand der erreichten Abbildungsqualität möglich (z.B. durch Bestimmung der Maréchalbreite).

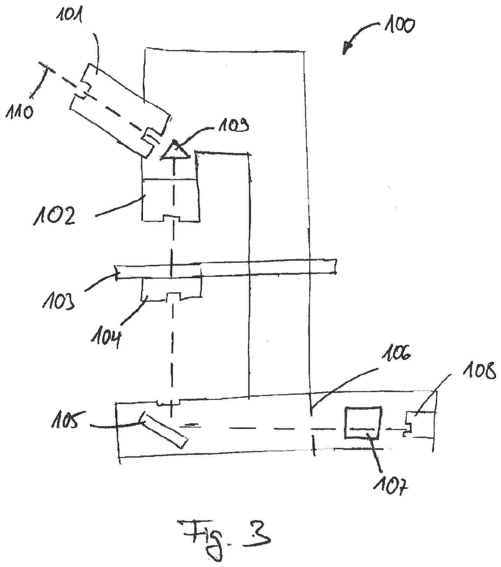

In Fig. 3 ist eine schematische Seitenansicht eines Mikroskops gezeigt, welches das erfindungsgemäße Mikroskopobjektiv umfasst. Im gezeigten Ausführungsbeispiel weist das Mikroskop 100 ein Okular 101, das erfindungsgemäße Mikroskopobjektiv 102, einen Objekttisch 103, einen Kondensor 104, einen Umlenkspiegel 105, eine Leuchtfeldblende 106, einen Kollektor 107, eine Lichtquelle 108 und ein Prisma 109 auf. Die zum Mikroskopobjektiv 102 gewandte Oberfläche des Objekttisches 103 bildet die Präparatebene. Weiterhin ist ein in das Mikroskop eingekoppeltes Lichtbündel 110 dargestellt.

Die Lichtquelle 108, welche z.B. eine Flachkernwendel umfasst, kann entweder direkt im Mikroskop-Fuß oder bei leistungsstärkeren Lichtmitteln wegen der Hitzeentwicklung in einem eigenen Lampengehäuse untergebracht sein. Von dort ausgehend passiert das von der Lichtquelle 108 erzeugte Licht zuerst den Kollektor 107, der beispielsweise zwei Sammellinsen umfasst, und wird durch diesen gebündelt.

Das gebündelte Licht kann dann über einen Umlenkspiegel in einen Kondensor 104 eintreten, um durch die stellvertretende Eintrittspupille, d.h. eine (variable) Aperturblende (nicht dargestellt) des Kondensors 104, des Mikroskops auf die Präparatebene gerichtet zu werden. Hierbei ist darauf zu achten, dass die für die Erreichung der größten benötigten Beleuchtungsapertur erforderliche Blendenöffnung, die sich im Maximalfall nach dem Objektiv mit der höchsten Apertur richtet, vollständig von dem Lichtquellenbild ausgefüllt ist. Eine Verkleinerung der Kondensorapertur kann durch entsprechendes Schließen der Aperturblende des Kondensors erzielt werden.

Der Kollektor 107 bildet die Flachkernwendel der Lichtquelle 108 in die Aperturblende ab. Diese Blende steht in dem vorderen Fokus des Kondensors 104, wird also von ihm ins Unendliche projiziert, d.h. aus jedem Punkt der in Aperturblendenebene abgebildeten Lichtquelle wird ein kollimiertes Lichtbündel im Bildraum des Kondensors erzeugt. Der Bildraum des Kondensors ist zugleich der Objektraum des Objektivs 102, wo sich auch das Präparat befindet. Dadurch werden die zuvor genannten kollimierten Strahlen im bildseitigen Fokus des Objektivs 102 abgebildet. Damit erklärt sich die wichtige Notwendigkeit der telezentrischen Strahlenführung im Objektraum des Mikroskopobjektivs 102, was durch die Positionierung der Objektivaperturblende im bildseitigen Fokus des Objektivs 102 realisiert werden kann.

Der Kondensor 104 sollte ferner so eingestellt sein, dass er der Leuchtfeldblende 106, die dem Kollektor 107 nachgeschaltet ist, ein scharfes Bild im Präparat bzw. in der Präparat- /Objektebene entwirft. Das Präparat selbst kann auf einem Träger liegen, welcher wiederum auf einem Objekttisch 103 über dem Kondensor 104 aufliegt. Oberhalb des Präparates befindet sich z.B. das Mikroskopobjektiv 102. Hierbei ist z.B. zu beachten, dass der Präparatenträger eine planparallele Platte normierter Dicke ist und aus einer normierten Glassorte besteht. Erst ihre obere Fläche bildet den Ort der Präparat-/Objektebene. Für die meisten Präparate der Biologie und Medizin liegen die dünnen Objektschichten unter einem sogenannten Deckglas, dessen Dicke und die Glassorten gerade normiert sind. Lediglich beispielhaft kann das Deckglas über die Deckglaskorrektur, bezeichnend "0.1 7/K5" aus dem geometrischen Glasweg in mm gegenüber der Glassorte, verfügen. Das automatische Scharfstellen des Objektes erfolgt durch Formänderung der Flüssiglinse innerhalb des Mikroskopobjektivs 102. An das Mikroskopobjektiv 102 kann neben dem lichtablenkenden Prisma 109 ein Tubus anschließen, d.h. eine Röhre, an deren oberem Ende sich das Okular 101 befindet. Mit dem Okular 101 kann im Falle einer Endlich-Optik das vom Mikroskopobjektiv 102 erzeugte reelle Zwischenbild nochmals vergrößert betrachtet werden.

Liste der Bezugszeichen:

| 2, 102 | Autofokussierbares Mikroskopobjektiv |
|---|---|
| 4 | Optisches System |
| 6 | Präparatebene |
| 8 | Frontgruppe |
| 10 | Linsengruppe |
| 11 | Aperturblende |
| G1, G2 | Linsengruppen |
| L1-L9 | Linsen |
| L10 | Flüssiglinse |
| $u_{G1/I}$, $u_{G1/O}$, $u_{G2/I}$, $u_{G2/O}$ | Aperturstrahlwinkel an der Stelle G1/I, G1/O, G2/I, G2/O; |
| $w_{G1/I}$, $w_{G1/O}$, $w_{G2/I}$, $w_{G2/O}$ | Hauptstrahlwinkel an der Stelle G1/I, G1/O, G2/I, G2/O; |
| $h_{G1/I}$, $h_{G1/O}$, $h_{G2/I}$, $h_{G2/O}$ | Aperturstrahlhöhe an der Stelle G1/I, G1/O, G2/I, G2/O; |
| G1/I | Eingang der Linsengruppe G1; |
| G1/O | Ausgang der Linsengruppe G1; |
| G2/I | Eingang der Linsengruppe G2; |
| G2/O | Ausgang der Linsengruppe G2. |
| 100 | Mikroskop |
| 101 | Okular |
| 103 | Objekttisch |
| 104 | Kondensor |
| 105 | Umlenkspiegel |
| 106 | Leuchtfeldblende |
| 107 | Kollektor |

| 108 | Lichtquelle |
|-----|-------------|
| 109 | Prisma |
| 110 | Lichtbündel |

**Patentansprüche**

1. Autofokussierbares Mikroskopobjektiv (2), umfassend
ein optisches System (4) aus mehreren optischen Komponenten, die jeweils durch eine Linse oder Linsengruppe gebildet sind,
wobei eine der mehreren optischen Komponenten eine Flüssiglinse (L10) ist, um die Autofokussierung des Mikroskopopjektivs (2) zu bewirken, und
wobei das optische System als stationäres System ausgebildet ist.

2. Mikroskopobjektiv (2) nach Anspruch 1, weiter eine Aperturblende (11) als weitere Komponente des optischen Systems (4) umfassend,
wobei die Flüssiglinse (L10) in der direkten Nähe der Aperturblende (11) angeordnet ist.

3. Mikroskopobjektiv (2) nach Anspruch 1 oder 2, wobei die Flüssiglinse (L10) in einem Bereich des optischen Systems (4) angeordnet ist, in dem die Umhüllende der in das optische System einkoppelbaren Strahlen am stärksten eingeschnürt ist.

4. Mikroskopobjektiv (2) nach einem der vorhergehenden Ansprüche, wobei eine der mehreren optischen Komponenten des optischen Systems (4) als erster Meniskus ausgebildet ist.

5. Mikroskopobjektiv (2) nach Anspruch 4, wobei die Flüssiglinse (L10), bezogen auf die Propagationsrichtung eines in das optische System (4) einkoppelbaren Lichtbündels, dem Meniskus und allen anderen optischen Komponenten nachgeschaltet ist.

6. Mikroskopobjektiv (2) nach Anspruch 4 oder 5, wobei die Flüssiglinse (L10) so im optischen System angeordnet ist, dass sie eine als Aperturblende (11) natürliche Lage in diesem System einnimmt.

7. Mikroskopobjektiv (2) nach einem der Ansprüche 4 bis 6, wobei eine der mehreren optischen Komponenten des optischen Systems (4) als zweiter Meniskus ausgebildet ist und die Flüssiglinse (L10) zwischen dem ersten und zweiten Meniskus angeordnet ist.

8. Mikroskopobjektiv (2) nach Anspruch 7, wobei der erste und zweite Meniskus derart ausgerichtet sind, dass in einem Brechungszustand der Flüssiglinse (L10) die Apertur- und Hauptstrahlen eines in das optische System einkoppelbaren Lichtbündels so geführt werden, dass der Aperturstrahlwinkel und der Hauptstrahlwinkel an der Lichtaustrittsfläche des ersten Menikus gleich oder ungefähr gleich sind mit dem Aperturstrahlwinkel und dem Hauptstrahlwinkel an der Lichteintrittsfläche des zweiten Meniskus.

9. Mikroskopobjektiv (2) nach Anspruch 7 oder 8, wobei die konkaven Flächen des ersten und zweiten Meniskus einander zugewandt sind.

10. Mikroskopobjektiv (2) nach einem der Ansprüche 4 bis 9, wobei der erste und/oder zweite Meniskus als Kittglied aus wenigstens zwei miteinander verkitteten Linsen ausgebildet ist.

11. Mikroskopobjektiv (2) nach einem der vorhergehenden Ansprüche, wobei das optische System derart ausgebildet ist, dass der Durchmesser der Austrittspupille dem 0.8 bis 1.3-fachen des Durchmessers des lichten optischen Durchlasses der Flüssiglinse (L10) entspricht.

12. Mikroskopobjektiv (2) nach einem der vorherigen Ansprüche, wobei das Mikroskopobjektiv derart ausgestaltet, dass eine Fokussierung im Bereich von mindestens +/- 20 wellenoptischen Schärfentiefen, insbesondere im Bereich von mindestens +/- 25 wellenoptischen Schärfentiefen durch eine Brechkraftvariation der Flüssiglinse (L10) im Bereich zwischen -2.2 und +2.2 Dioptrien bewirkt wird.

13. Mikroskopobjektiv (2) nach einem der vorherigen Ansprüche, wobei zumindest eine der optischen Komponenten des optischen Systems (4) dergestalt ist, dass ein durch das Mikroskopobjektiv erzeugtes Bild eine sphärochromatische Korrektion erhält.

14. Mikroskopobjektiv (2) nach einem der vorhergehenden Ansprüche, das als Planachromat oder Planapochromat ausgebildet ist.

15. Mikroskop (100), das ein Mikroskopobjektiv (2) gemäß einem der vorhergehenden Ansprüche umfasst.

**Geänderte Patentansprüche gemäss Regel 137(2) EPÜ.**

1. Autofokussierbares Mikroskopobjektiv (2), umfassend

ein optisches System (4), das mehrere optische Komponenten, die jeweils durch eine Linse oder Linsengruppe gebildet sind, und eine Aperturblende (11) umfasst,
wobei eine der mehreren optischen Komponenten eine Flüssiglinse (L10) ist, um die Autofokussierung des Mikroskopobjektivs (2) zu bewirken, indem mithilfe der Flüssiglinse (L10) das Mikroskopobjektiv (2) in automatisierter Weise auf eine bestimmte Schärfeebene eingestellt wird,
wobei die Flüssiglinse (L10) in der direkten Nähe der Aperturblende (11) angeordnet ist, wobei das optische System als stationäres System ausgebildet ist, in dem die Position der mehreren optischen Komponenten im optischen System (4) unverändert bleibt, und
wobei das Mikroskopobjektiv (2) derart ausgestaltet, dass eine Fokussierung im Bereich von mindestens +/-20 wellenoptischen Schärfentiefen durch eine Brechkraftvariation der Flüssiglinse (L10) im Bereich zwischen -2.2 und +2.2 Dioptrien bewirkt wird.

2. Mikroskopobjektiv (2) nach Anspruch 1, wobei die Flüssiglinse (L10) in einem Bereich des optischen Systems (4) angeordnet ist, in dem die Umhüllende der in das optische System einkoppelbaren Strahlen am stärksten eingeschnürt ist.

3. Mikroskopobjektiv (2) nach einem der vorhergehenden Ansprüche, wobei eine der mehreren optischen Komponenten des optischen Systems (4) als erster Meniskus ausgebildet ist.

4. Mikroskopobjektiv (2) nach Anspruch 3, wobei die Flüssiglinse (L10), bezogen auf die Propagationsrichtung eines in das optische System (4) einkoppelbaren Lichtbündels, dem Meniskus und allen anderen optischen Komponenten nachgeschaltet ist.

5. Mikroskopobjektiv (2) nach Anspruch 3, wobei die Flüssiglinse (L10) so im optischen System angeordnet ist, dass sie eine als Aperturblende (11) natürliche Lage in diesem System einnimmt.

6. Mikroskopobjektiv (2) nach einem der Ansprüche 3 oder 5, wobei eine der mehreren optischen Komponenten des optischen Systems (4) als zweiter Meniskus ausgebildet ist und die Flüssiglinse (L10) zwischen dem ersten und zweiten Meniskus angeordnet ist.

7. Mikroskopobjektiv (2) nach Anspruch 6, wobei der erste und zweite Meniskus derart ausgerichtet sind, dass in einem Brechungszustand der Flüssiglinse (L10) die Apertur- und Hauptstrahlen eines in das optische System einkoppelbaren Lichtbündels so geführt werden, dass der Aperturstrahlwinkel und der Hauptstrahlwinkel an der Lichtaustrittsfläche des ersten Menikus gleich oder ungefähr gleich sind mit dem Aperturstrahlwinkel und dem Hauptstrahlwinkel an der Lichteintrittsfläche des zweiten Meniskus.

8. Mikroskopobjektiv (2) nach Anspruch 6 oder 7, wobei die konkaven Flächen des ersten und zweiten Meniskus einander zugewandt sind.

9. Mikroskopobjektiv (2) nach einem der Ansprüche 3 bis 8, wobei der erste und/oder zweite Meniskus als Kittglied aus wenigstens zwei miteinander verkitteten Linsen ausgebildet ist.

10. Mikroskopobjektiv (2) nach einem der vorhergehenden Ansprüche, wobei das optische System derart ausgebildet ist, dass der Durchmesser der Austrittspupille dem 0.8 bis 1.3-fachen des Durchmessers des lichten optischen Durchlasses der Flüssiglinse (L10) entspricht.

11. Mikroskopobjektiv (2) nach einem der vorherigen Ansprüche, wobei das Mikroskopobjektiv derart ausgestaltet, dass eine Fokussierung im Bereich von mindestens +/- 25 wellenoptischen Schärfentiefen durch die Brechkraftvariation der Flüssiglinse (L10) im Bereich zwischen -2.2 und +2.2 Dioptrien bewirkt wird.

12. Mikroskopobjektiv (2) nach einem der vorherigen Ansprüche, wobei zumindest eine der optischen Komponenten des optischen Systems (4) dergestalt ist, dass ein durch das Mikroskopobjektiv erzeugtes Bild eine sphärochromatische Korrektion erhält.

13. Mikroskopobjektiv (2) nach einem der vorhergehenden Ansprüche, das als Planachromat oder Planapochromat ausgebildet ist.

14. Mikroskop (100), das ein Mikroskopobjektiv (2) gemäß einem der vorhergehenden Ansprüche umfasst.

Fig.1

Fig.2

Fig. 3

**Europäisches Patentamt**
**European Patent Office**
**Office européen des brevets**

# EUROPÄISCHER RECHERCHENBERICHT

Nummer der Anmeldung

EP 20 19 2230

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/149407 A1 (DHARMATILLEKE SAMAN [SG] ET AL) 23. Juni 2011 (2011-06-23)<br>* Abbildungen 15-20 *<br>* Absatz [0005] *<br>* Absatz [0100] - Absatz [0105] *<br>----- | 1-9,13 | INV.<br>G02B3/14<br>G02B21/02 |
| X | KANHERE ADITI ET AL: "Remote Axial Tuning in Microscopy Utilizing Hydrogel-Driven Tunable Liquid Lens",<br>JOURNAL OF MICROELECTROMECHANICAL SYSTEMS, IEEE SERVICE CENTER, US,<br>Bd. 25, Nr. 2, 1. April 2016 (2016-04-01), Seiten 304-310, XP011605086,<br>ISSN: 1057-7157, DOI:<br>10.1109/JMEMS.2016.2518922<br>[gefunden am 2016-03-31]<br>* Abbildungen 1-5 *<br>* Seite 306 *<br>----- | 1,2,4,5,10-15 | |
| X | US 2008/297911 A1 (CHRISTENSON TODD C [US] ET AL) 4. Dezember 2008 (2008-12-04)<br>* Abbildungen 8,9 *<br>* Absatz [0023] - Absatz [0024] *<br>* Absatz [0049] - Absatz [0061] *<br>----- | 1,4,6,13-15 | |

RECHERCHIERTE SACHGEBIETE (IPC)

G02B

Der vorliegende Recherchenbericht wurde für alle Patentansprüche erstellt

| Recherchenort | Abschlußdatum der Recherche | Prüfer |
|---|---|---|
| München | 22. Januar 2021 | Beutter, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 20 19 2230

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2021

| Im Recherchenbericht angeführtes Patentdokument | Datum der Veröffentlichung | Mitglied(er) der Patentfamilie | Datum der Veröffentlichung |
|---|---|---|---|
| US 2011149407 A1 | 23-06-2011 | CN 101473247 A<br>EP 2035867 A1<br>JP 2009540358 A<br>TW 200807027 A<br>US 2011149407 A1<br>WO 2007142602 A1 | 01-07-2009<br>18-03-2009<br>19-11-2009<br>01-02-2008<br>23-06-2011<br>13-12-2007 |
| US 2008297911 A1 | 04-12-2008 | KEINE | |

EPO FORM P0461

Für nähere Einzelheiten zu diesem Anhang : siehe Amtsblatt des Europäischen Patentamts, Nr.12/82